(19) Europäisches Patentamt
European Patent Office
Office européen des brevets

(11) **EP 4 197 763 A1**

(12) **EUROPEAN PATENT APPLICATION**

(43) Date of publication:
**21.06.2023 Bulletin 2023/25**

(21) Application number: **21306812.5**

(22) Date of filing: **16.12.2021**

(51) International Patent Classification (IPC):
*B29D 11/00* (2006.01)

(52) Cooperative Patent Classification (CPC):
**B29D 11/00009; B29D 11/00903; B29D 11/00961**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Essilor International**
**94220 Charenton-Le-Pont (FR)**

(72) Inventors:
• **BAUDART, Thierry**
**93340 Joinville-Le-Pont (FR)**
• **HERFORT, David**
**94340 Vincennes (FR)**
• **GUEFACK, Steve**
**94500 Champigny-Sur-Marne (FR)**

(74) Representative: **Jacobacci Coralis Harle**
**32, rue de l'Arcade**
**75008 Paris (FR)**

(54) **METHOD FOR DETERMINING A DIPPING ORIENTATION OF AN OPHTHALMIC LENS**

(57) A computer-implemented method for determining a dipping orientation of an ophthalmic lens (2) with respect to a dipping apparatus feature, the method comprising the step of:
- determining a lens parameter relative to a shape of the ophthalmic lens (2);
- determining said dipping orientation taking into account an interaction parameter representative of a relationship between said lens parameter and said dipping apparatus feature.

**Fig.3**

**Description**

TECHNICAL FIELD OF THE INVENTION

The invention relates in general to the coating of optical elements by dipping in a bath.

The invention relates more precisely to a computer-implemented method for determining a dipping orientation of an ophthalmic lens with respect to a dipping apparatus feature.

The invention also relates to a system for implementing this method.

BACKGROUND INFORMATION AND PRIOR ART

In order to manufacture an ophthalmic lens, it is conventional to deposit one or more coating layers imparting various optical or mechanical properties to the lens such as an ability to withstand impacts or abrasion, attenuating reflections, photochromy, etc.

In industrial processes for manufacturing lenses, and in particular ophthalmic lenses, these layers are deposited by dipping in a bath of solution or by dispersing the varnish on the corresponding face of the substrate and then centrifuging it to smooth it. When making use of dipping, the most inexpensive method, tooling is used that serves to hold the lens while it is being manipulated and more particularly while it is immersed in the treatment bath. Such holding tooling typically consists in an individual clamp having multiple clips, for example three, engaging the lens on its peripheral edge. The clips usually hold the lens at two lateral contact locations and one bottom contact location.

It is found that use of such tooling generates defects on the lens. A first type of defects consists in zones where the deposited material is too thick. These zones of extra thickness, also called meniscuses, occur at contact locations between the lens and the clips due to capillarity and at the bottom of the lens due to gravity. They can extend radially several millimeters towards the center of the lens, thereby affecting the working portion thereof. These zones of extra thickness damage the quality of the coating, and more generally they harm the appearance and even the optical functions of the lens.

A second type of defects consists in lesions induced by the clips maintaining the lens. The pressure applied by the clips on the peripheral edge might cause cracks or breaks, referred to as "clip marks", in the glass of the lens. These cracks or breaks can also penetrate radially towards the center of the lens. Moreover, the way they propagate is highly unpredictable.

In a general manner, these defects should be prevented as much as possible.

After the coating, the lens generally undergoes several steps and in particular a trimming of its peripheral edge, typically so that the lens fits in the rim of a frame. In this case, it is possible to determine a region of interest of the lens, also called working portion, which corresponds to the most important part of the ophthalmic lens relative to its finished shape for mounting. This working portion for example corresponds to the zone of the lens where more than 90% of the gazes of a wearer would go through when the lens is mounted in a frame and worn by the wearer. In this case, the above-mentioned defects are critical when near the region of interest of the lens.

SUMMARY OF THE INVENTION

Therefore, one object of the invention is to provide a computer-implemented method for determining a dipping orientation of an ophthalmic lens with respect to a dipping apparatus feature, the method comprising the step of:

- determining a lens parameter relative to a shape of the ophthalmic lens;
- determining said dipping orientation taking into account an interaction parameter representative of a relationship between said lens parameter and said dipping apparatus feature.

Thanks to the method according to the invention, the interaction between the ophthalmic lens and a dipping apparatus which will be used for the dip treatment can be digitally estimated. Therefore, the ophthalmic lens can be oriented such as to limit the appearance of defects and/or to position them away from a valuable portion of the ophthalmic lens.

In an embodiment, said dipping apparatus feature is a clip holding the ophthalmic lens by its peripheral edge during a dip treatment and said interaction parameter comprises at least one of the following:

- a thickness of the peripheral edge of the ophthalmic lens where the clip holds the peripheral edge when the ophthalmic lens is oriented according to said dipping orientation;
- a primary distance between a region of interest and a contact location where the clip holds the peripheral edge when the ophthalmic lens is oriented according to said dipping orientation;
- a secondary distance between the region of interest and a bottom of the ophthalmic lens with respect to a bath, in which the ophthalmic lens is immersed during the dip treatment, when the ophthalmic lens is oriented according to said dipping orientation.

Advantageously, the ophthalmic lens can then be oriented such that one or more clips hold ophthalmic lens where the thickness of peripheral edge is appropriate to resist the pressure applied by these clips. Consequently, the probability of cracks or breaks appearing on the peripheral edge is reduced.

Advantageously, the ophthalmic lens can also be oriented such as to place the possible above-mentioned defects outside the region of interest. To do so, the ophthalmic lens can be oriented such that the possible defects appear farther than the primary distance from the region of interest. In other words, this allows anticipating the appearance of the defects and to place them in useless areas of the ophthalmic lens. Preferably, the dipping orientation is determined such as to place the defects as far as possible from the region of interest. Thus, in a remarkable way, in the eventuality the defects cannot be prevented, their location can be chosen so that they do not affect the further processing of the lens.

Advantageously, the ophthalmic lens can also be oriented by taking into account its position with respect to the bath in which it is immersed during the dip treatment. At the bottom, that is to say at the part of the ophthalmic lens which will be the last to exit the bath during the dip treatment, the coated material will form a meniscus, referred to as "the drop", due to gravity. Taking into account the bottom of the ophthalmic lens allows placing the drop outside the region of interest and preferably as far as possible from the region of interest. In a remarkable way, even though it is nearly impossible to prevent the drop, its location can be chosen so that it does not affect the further processing of the lens.

Other advantageous and non-limiting features of the method according to the invention are:

- the method further comprises the steps of acquiring geometrical data representative of the shape of the ophthalmic lens, and determining, based on said geometrical data, at least one of the thickness of the peripheral edge of the ophthalmic lens and the region of interest;
- acquiring geometrical data consist in accessing numerical data;
- said dipping orientation is determined such as to reach at least one of the following criteria:

  - the clip holds the peripheral edge where the thickness of the peripheral edge is above a predetermined thickness,
  - the clip holds the peripheral edge where the thickness of the peripheral edge is below an upper thickness,
  - the clip holds the peripheral edge where the thickness of the peripheral edge is maximum,
  - the clip holds the peripheral edge where the thickness of the peripheral edge is above a predetermined percentage of a maximum thickness of the peripheral edge,
  - said primary distance is above a predetermined length;
  - said primary distance is maximum,
  - said primary distance is above a predetermined percentage of a maximum length between the region of interest and the peripheral edge,
  - said secondary distance is above another predetermined length
  - said secondary distance is maximum,

  - said secondary distance is above another predetermined percentage of the maximum length;

- said dipping apparatus comprises at least two clips and wherein said dipping orientation is determined such as to reach at least one of the following criteria:

  - the smallest one of the thicknesses of the peripheral edge of the ophthalmic lens where one of the clips holds the peripheral edge when the ophthalmic lens is oriented according to said dipping orientation is maximum,
  - the smallest one of the primary distances between the region of interest and a contact location where one of the clips holds the peripheral edge when the ophthalmic lens is oriented according to said dipping orientation is maximum;

- said dipping orientation is determined by minimizing a cost function comprising the following interaction parameters:

  - the thickness of the peripheral edge of the ophthalmic lens where the clip holds the peripheral edge when the ophthalmic lens is oriented according to said dipping orientation,
  - said primary distance,
  - said secondary distance;

- said region of interest comprises one of the followings:

  - a shape of a rim in which the ophthalmic lens is to be mounted in;
  - an intended shape of the ophthalmic lens after trimming;
  - an area of the ophthalmic lens wherein the thickness is greater than a selected thickness.

- the ophthalmic lens comprises a manufacturing mark, the method further comprising a step of determining, based on said dipping orientation, a position of the manufacturing mark with respect to the dipping apparatus feature;
- the method further comprises a step of applying a dipping mark on the ophthalmic lens representative of said dipping orientation;
- the dipping mark comprises one of the followings: a non-permanent mark, a laser engraving;
- the method further comprises a step of sending instructions to a dipping apparatus for moving the ophthalmic lens into said dipping orientation;
- said dipping orientation is also determined taking into account one of the followings:

  - a material in which the ophthalmic lens is made of,
  - a prescription according to which the ophthalmic lens has been manufactured,
- a linear edge between two regions of the ophthalmic lens,
- a thickness of the ophthalmic lens;

- the dipping treatment is used to provide at least one of the following:

  - a tinted layer,
  - a layer of a hard-coat,
  - a layer of a primer coating,
  - an anti-shock layer,
  - an anti-reflection layer.

The inventions also relates to a system for determining a dipping orientation of an ophthalmic lens with respect to a dipping apparatus feature, the system comprising a processing unit adapted to determine a lens parameter relative to a shape of the ophthalmic lens and to determine said dipping orientation taking into account an interaction parameter representative of a relationship between said lens parameter and said dipping apparatus feature.

DETAILED DESCRIPTION OF EXAMPLE(S)

The following description, enriched with joint drawings that should be taken as non-limitative examples, will help understand the invention and figure out how it can be realized.

On the appended drawings:

- figure 1 is a schematic representation of the different steps of a method for determining a dipping orientation of an ophthalmic lens according to the invention,
- figure 2 is a schematic front view of an ophthalmic lens, holds by the clips for a dip treatment, in an arbitrary orientation,
- figure 3 is a schematic front view of the ophthalmic lens of figure 2 when oriented in the dipping orientation.

In the following description and claims, the verb "to comprise" is to be interpreted in an inclusive meaning.

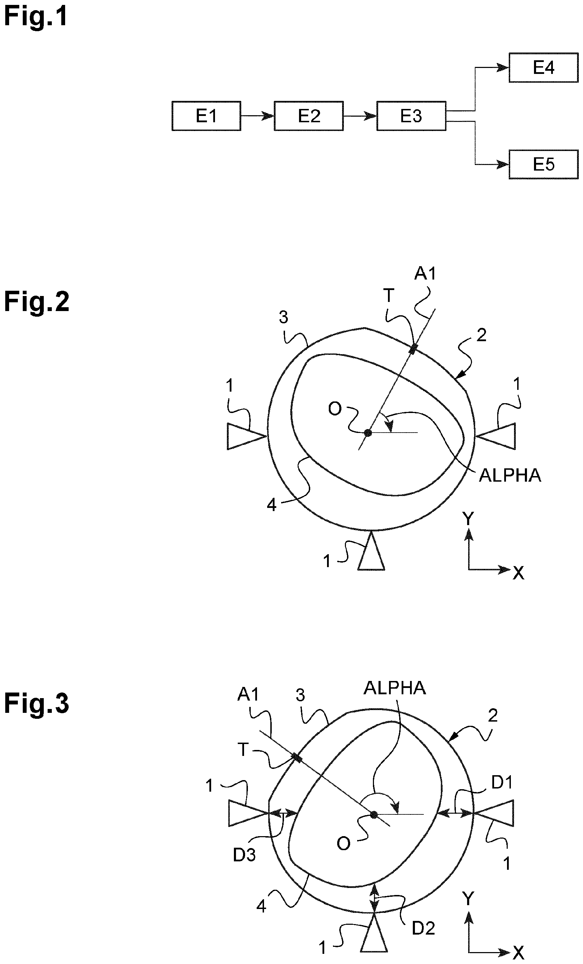

Figure 1 shows a computer-implemented method according to the invention for determining a dipping orientation of an ophthalmic lens 2 with respect to a dipping apparatus feature. Here, the dipping apparatus feature refers to a structural component of a dipping apparatus. Generally, in the following, the dipping apparatus feature is one or more clips designed to hold the ophthalmic lens 2 by its peripheral edge 3 during a dip treatment. Therefore, method according to the invention allows determining the dipping orientation of the ophthalmic lens 2 with respect to the one or more clips 1 holding the ophthalmic lens 2 by its peripheral edge 3 during the dip treatment.

The method according to the invention is implemented by a system. The system comprises a processing unit which is programmed to carry out the steps of the method. The processing unit comprises one or more processors and one or more memories having in memory instructions which, when implemented by the one or more processors, allow implementing the method.

The dip treatment aims to deposit one or more coating layers on one or both optical surfaces of the ophthalmic lens 2. The dip treatment consists in immersing the ophthalmic lens 2 in a liquid bath and removing the ophthalmic lens 2 from the liquid bath so that a coating layer can form. The dipping orientation is the orientation of the ophthalmic lens 2, with respect to the one or more clips 1, in which the ophthalmic lens 2 is intended to be immersed in and removed from the liquid bath.

For instance, the dip treatment can be used to provide at least one of the following:

- a tinted layer;
- a layer of a hard-coat;
- a layer of a primer coating;
- an anti-shock layer;
- an anti-reflection layer.

The dip treatment is performed by means of the dipping apparatus with comprises the liquid bath and a clamp having here three branches, each branch terminating by one clip 1. Alternatively, the dipping apparatus feature may be the liquid bath.

During the dip treatment, the ophthalmic lens 2 is held vertically, which means that its mean plane is substantially vertical. In other words, the mean plane of the ophthalmic lens 2 is substantially perpendicular to the free surface of the liquid bath. The mean plane of the ophthalmic lens 2 is for example the plan which best fits one of the optical surfaces of the ophthalmic lens 2. As a variant, the ophthalmic lens may be hold tilted by the clips.

As illustrated in figures 2 and 3, one lower clip 1 is located below the ophthalmic lens 2 such as to support its weight and two lateral clips 1 are located laterally such that the ophthalmic lens 2 does not move sideways. The two lateral clips 1 are aligned in a horizontal plane. Multiple configurations, with various positions and numbers of clips, are possible depending on the dipping apparatus chosen.

The method comprises a preliminary step (not represented in figure 1) wherein the dipping apparatus is selected and wherein the positions of the clips 1 in relation to each other are determined. The dipping apparatus is for example selected in a list of commercially available dipping apparatus or among dipping apparatus at the disposal of a professional performing or supervising the dip treatment. Alternatively, the dipping apparatus may be defined and manufactured by the professional. Selecting the dipping apparatus comprises accessing information describing the dipping apparatus. This information allows determining the positions of the clips 1 in relation to each other and also, preferentially, the positions of the clips 1 in relation to the liquid bath.

The ophthalmic lens 2 is a finished ophthalmic lens, having the curvatures of its surfaces in their final shape, i.e. adapted to correct a vision default of a wearer. It can be a lens manufactured directly to this shape, by injection molding, casting, or additive manufacturing. The ophthalmic lens 2 is for example made of a synthetic resin or a mineral glass. Alternatively, it can be a semi-finished lens which has already undergone a surfacing step. In this surfacing step, one or both optical surfaces of the ophthalmic lens 2 are surfaced in order to be customized for a wearer according to a prescription previously established.

Despite the ophthalmic lens 2 being referred to as "finished", it still has to undergo several steps before being used by the wearer. Generally, the ophthalmic lens 2 still has to be trimmed to fit in the rim of a frame. As a variant, the ophthalmic lens may be already trimmed, it is then sometimes called an "edged lens".

In a classical way, as illustrated in figure 2, the ophthalmic lens 2 is substantially disk-shaped. The peripheral edge 3 is a peripherical face of the ophthalmic lens 2 linking a front optical surface and a back optical surface of ophthalmic lens 2. The back optical surface is a concave surface which will face the eye of the wearer (when the ophthalmic lens 2 will be worn) and the front optical surface the opposite surface, which is most often convex. The ophthalmic lens 2 has a central axis O which can be defined as the axis passing by the center of the front optical surface and perpendicular to the front optical surface. The peripheral edge 3 is a surface extending along the central axis of the ophthalmic lens 2 which means that the peripheral edge 3 has most often the shape of a right circular cylinder. As a variant, the peripheral edge may be curved.

The ophthalmic lens 2 may comprise one or more manufacturing marks which allow determining its orientation in a two-dimensional referential. Those manufacturing marks are for example micro-engravings in the form of dots, numbers, letters, circles, stars, logos, or lines. The micro-engravings are not visible to the naked eye, in particular when the ophthalmic lens 2 is worn by the wearer. Those marks might be performed such that a trained eye may detect them, especially in chosen luminous conditions. For example, a referenced mark is representative of the central axis O as illustrated in figures 2 and 3.

The ophthalmic lens 2 being held by its peripheral edge 3 means that the contact areas, also called contact locations, between the clips 1 and the ophthalmic lens 2 extend mainly on the peripheral edge 3 with respect to the optical surfaces. The clips 1 may have a slight contact on the edges of the optical surfaces. Preferentially, the contact areas between the clips 1 and the ophthalmic lens 2 extend exclusively on the peripheral edge 3 or above 80% of the contact area is located on the peripheral edge 3. Each clip 1 is made of metallic wire and the contact areas are linear contact areas. In alternative embodiments, the clips are not metallic or thicker than metallic wire. In figure 2 and 3, the linear contact areas are seen as single contact points.

As a variant, the clips might individually pinch and/or grasp the ophthalmic lens. In this case, one clip may be sufficient to hold the ophthalmic lens during the dip treatment. In further variants, the clips may comprise "V"-shaped holder and the contact areas are thus two dot-like contact points per clip.

As show in figure 1, the method starts with a step E1 of acquiring geometrical data representative of a shape of the ophthalmic lens 2. Here, the geometrical data being representative of the shape of the ophthalmic lens 2 means that the geometrical data can be used, by itself or with other data, to deduce the shape of the ophthalmic lens 2. The shape of the ophthalmic lens 2 is for example a contour, a profile, or an external surface of the ophthalmic lens 2.

Preferentially, geometrical data are derived from a step of design of the ophthalmic lens 2. The design of the ophthalmic lens 2 for example comprises the calculus of the curvature of the optical surfaces in order to achieve a looked-for correction for the wearer. The step of design allows (and is generally followed by) the surfacing of the optical surfaces. Alternatively, the step of design is followed by the setting of the right molds to form the surfaces of the lens.

Acquiring geometrical data comprises accessing numerical data representative of the shape of the ophthalmic lens 2. Numerical data can for example be retrieved from a distant server or from a removable memory storage such as a USB drive. Numerical data are representative of the shape of the front optical surface and/or of the back optical surface, for example in the form of a point cloud in a three dimensional referential or in the form of surfaces equations. The processing unit retrieves the numerical data and store them on its one or more memories.

Acquiring geometrical data may also comprise measuring physical features of the ophthalmic lens 2, such as its dimensions, for example optically or with a ruler.

Acquiring geometrical data may also comprise in deriving the shape of the ophthalmic lens 2, theoretically or empirically, from a standard prescription used to manufacture the ophthalmic lens 2, possibly completed with knowing the curvature of one of the surfaces.

In a general way, at the end of step E1, geometrical data are stored on the one or more memories.

The method then continues with a step E2 wherein the processing unit determines, based on the geometrical data, at least one lens parameter relative to the shape of the ophthalmic lens 2. Here, the lens parameter being relative to the shape of the ophthalmic lens 2 means that the shape of the ophthalmic lens 2 can be used to deduce the lens parameter. Lens parameters may comprise: a thickness of the peripheral edge 3 of the ophthalmic lens 2, a thickness of the whole ophthalmic lens 2, a region of interest 4 of the ophthalmic lens 2, a bottom of the of the ophthalmic lens 2 with respect to the dipping apparatus. As detailed later, lens parameters may also be determined manually, for example by measuring physical features of the ophthalmic lens 2.

The method comprises a main step E3 of determining the dipping orientation with respect to the clips 1 of the dipping apparatus feature. This determination is performed by taking into account an interaction parameter representative of a relationship between at least one lens parameter and at least one dipping apparatus feature. The interaction parameter is more specifically representative of a spatial relationship, i.e. an arrangement, between the ophthalmic lens 2, which is represented by the lens parameter, and the dipping apparatus, which is represented by the dipping apparatus feature. Examples of interaction parameters are given thereafter in the detailed embodiment.

When held by the clips 1, the positioning of the ophthalmic lens 2 has only one degree of freedom left: a rotation around the central axis O of the ophthalmic lens 2. The dipping orientation can therefore be characterized by an angle. In the illustrated example, the angle ALPHA characterizing the dipping orientation is the angle, measured in a clockwise direction, between a main axis A1 of the ophthalmic lens 2 and an external reference axis. The main axis A1 can be defined based on the manufacturing marks. For example, the main axis A1 is a straight line passing by the central axis O and a top manufacturing mark T. The external reference axis is for example the horizontal axis X represented in figures 2 and 3.

As a variant, when there are no manufacturing marks, the main axis A1 may be determined according to other physical features of the lens such as a polarizing orientation axis, an axis of cylinder, an axis linking the central axis to a thinnest or thickest point of the peripheral edge 3, or any other remarkable axis.

In a first embodiment, in the main step E3, the processing unit determines the dipping orientation by taking into account the thickness of the peripheral edge 3. More specifically, the processing unit takes into account the thickness of the peripheral edge 3 where the clips 1 holds the peripheral edge 3, that is to say at the above-mentioned contact locations. In this first embodiment, an interaction parameter taken into account in step E3 is therefore the thickness of the peripheral edge 3 of the ophthalmic lens 2 where one of the clip 1 holds the peripheral edge 3 when the ophthalmic lens 2 is oriented according to said dipping orientation

The thickness of the peripheral edge 3 where the clips 1 holds the peripheral edge 3 is considered when the ophthalmic lens 2 is oriented according to the dipping orientation.

Here, in all embodiments, the main step 3 consists in testing one or more orientations, according to which the ophthalmic lens 2 may be held during the dip treatment, in order to determine the dipping orientation.

In other words, determining the dipping orientation by taking into account the ophthalmic lens 2 when it is oriented according to the dipping orientation means that the main step E3 is a recursive process in the sense that the determination of the dipping orientation is based on parameters (such as the thickness of the peripheral edge 3 at the location where the clips 1 holds the peripheral edge 3) which themselves would depends on the dipping orientation.

In this first embodiment, the objective is to prevent the appearance of clip marks on the peripheral edge 3 of the ophthalmic lens by positioning the clips 1 at locations where the peripheral edge 3 thickness is adequate, i.e. great enough.

The thickness of the peripheral edge 3 is defined as the dimension of the peripheral edge 3 along the direction of the central axis O. In other words, the thickness of the peripheral edge 3 corresponds the distance between the front optical surface and the back optical surface of the ophthalmic lens 2 at the periphery thereof. More generally, the thickness of the ophthalmic lens 2 corresponds the distance between the front optical surface and the back optical surface of the ophthalmic lens 2 along the central axis O.

In this first embodiment, step E2 comprises determining, here based on the geometrical data, the thickness of the peripheral edge 3 of the ophthalmic lens 2.

For example, based on a point cloud representative of the external surface of the ophthalmic lens 2, the processing unit may identify the peripheral edge 3 and determine the thickness of the peripheral edge 3.

Still in example, the processing unit may derive the thickness of the peripherical edge 3 from the curvatures of the optical surfaces and from the thickness of the ophthalmic lens 2 at the central axis O.

Still in example, the thickness of the peripherical edge 3 may be directly the result of a manual measurement with a ruler performed in step E1.

The processing unit determines the thickness of the peripheral edge 3 along all the periphery of the ophthalmic lens 2. The thickness of the peripherical edge 3 is then stored in the one or more memories. The thickness of the peripherical edge 3 is for example stored in a table wherein values correspond to its thickness at given angles with respect to the main axis A1 or stored as a continuous function establishing a relationship between its thickness and an angle with respect to the main axis A1. In a first time, the thickness of the peripherical edge 3 might be determined for few given angles (for example 20) and then, in a second time, other values may be interpolated in-between.

As a variant, the processing unit might determine the thickness of the peripheral edge only at few chosen points of the periphery, that is to say for few given angles, for example 10 or 20 angles. In this case, in addition, it is possible extrapolate other values of the thickness in-between those few chosen points.

The method then continues with the main step E3 wherein the processing unit determines the dipping orientation.

More specifically, in this first embodiment, the processing unit determines the dipping orientation in order to reach at least one of the flowing criteria:

i) each clip 1 holds the peripheral edge 3 where the thickness of the peripheral edge 3 is above a predetermined thickness;

ii) one clip 1 holds the peripheral edge 3 where the thickness of the peripheral edge 3 is maximum;

iii) the clips 1 hold the peripheral edge 3 such that the total contact thickness is maximum;

iv) each clip holds the peripheral edge where the thickness of the peripheral edge is above a predetermined percentage of a maximum thickness of the peripheral edge 3,

v) the clips 1 hold the peripheral edge 3 such that the smallest thickness held by a clip 1 is maximum or is a local maximum.

The main step E3 comprises testing one or several orientations of the ophthalmic lens 2 with respect to the clips 1, that is to say one or several angles ALPHA, in order to meet at least one of the above-listed criteria. The dipping orientation corresponds to one of the tested orientations for which at least one of the above-mentioned criteria is met. The testing may be done through calculation only, for example using a mathematical model. It could alternatively be done by modelling or thanks to recursive function.

Which criterion or criteria to reach might be chosen by the eye-care professional. The criteria may also be weighted relatively to each other. This means that the criteria might be ranked by priority.

The predetermined thickness is chosen in order to prevent clip marks on the ophthalmic lens 2. In other words, it is chosen such that above this predetermined thickness, the ophthalmic lens 2 is resistant enough to withstand the pressure of the clip 1 and, therefore, the probability of appearance of a clip mark is very low.

The predetermined thickness may for example be chosen based on the type of clamp, on the pressure applied by the clips 1 on the ophthalmic lens 2 (which may in returns depends on the diameter of the ophthalmic lens 2) or on the type of glass the ophthalmic lens 2 is made of. The predetermined thickness may be determined through dedicated a series of tests.

The predetermined thickness is for example comprised between 0.5 mm and 3 mm for an ophthalmic lens which diameter is comprised between 65 mm and 85 mm. The predetermined thickness may not be the same for the lower clip 1 as for the lateral clips 1.

In addition to the above-listed criteria, the processing unit may determine the dipping orientation such that each clip 1 holds the peripheral edge 3 where the thickness of the peripheral edge 3 is below an upper thickness. The upper thickness is for example equal to an opening distance of the clip 1 when the clip is intended to grasp and/or pinch the ophthalmic lens 2 between two parts of the clip 1, for instance when the clips 1 is a clamp, a rack or a hook or the like. The upper thickness is for example comprised between 12 mm and 20 mm. Then, for instance, the dipping orientation might be determined such that each clips holds the peripheral edge 3 where the thickness of the peripheral edge 3 is comprised between the predetermined thickness and the upper thickness.

In the eventuality that, in a first iteration of the main step E3, criterion i) cannot be reached, the predetermined thickness might be decreased and the main step E3 repeated until criterion i) is reached.

The predetermined percentage of the maximum thickness is for example comprised between 80% or 90% of the maximum thickness of the peripheral edge 3. Like the predetermined thickness, the predetermined percentage of the maximum thickness may for example be adapted depending on the type of clamp, on the pressure applied by the clips 1 on the ophthalmic lens 2 or on the type of glass the ophthalmic lens 2 is made of.

The total contact thickness is the sum of the thicknesses of the peripheral edge at each contact location.

In a general way, the above-listed criteria aim to minimize the probability of appearance of a clip mark by presenting to the clips 1 parts of the peripheral edge 3 where the thickness is sufficient. Other criteria based on the thickness of the peripheral edge 3 are conceivable. For example, the thickest location of the peripheral edge 3 might be chosen to position one clip 1. Then, the location of the other clips 1 may be estimated and the thickness of the peripheral edge 3 at those locations may be measured. Finally, this orientation might be determined as the dipping orientation if, at those locations, the thickness of the peripheral edge is above the predetermined thickness. Advantageously, in that case, only a limited number of measurements are necessary.

In a second embodiment, step E2 comprises determining a region of interest 4 of the ophthalmic lens 2.

In this second embodiment, this objective is to orient the ophthalmic lens 2 such that potential defects, i.e. clips marks or meniscuses of solidified liquid induced by the clips 1, are positioned outside the region of interest 4 and preferentially the further away from the region of interest 4. Therefore, in addition to preventing clip marks by taking into account the thickness of the peripheral edge 3, potential defects can be adequately positioned such that they have no impact on the further processing of the ophthalmic lens 2.

Classically, the region of interest 4 corresponds to a useful or working part of the ophthalmic lens 2. Generally, since it is a finished lens, the valuable part of the ophthalmic lens 2 is centered around its central axis O. The periphery of the ophthalmic lens 2 may be considered as less valuable because it will be removed during the trimming step.

For example, the region of interest 4 may be a shape or an outline of a rim in which the ophthalmic lens 2 will be mounted in. In figures 2 and 3, the region of interest 4 represents the trace of such a rim.

The region of interest 4 may also be an intended shape of the ophthalmic lens 2 after trimming. After trimming, and therefore after the dip treatment, the ophthalmic lens 2 is referred to as a final ophthalmic lens or a trimmed lens or an edged lens. In many cases, the intended shape of the ophthalmic lens 2 after trimming corresponds to the outline of the rim. The other cases correspond to lenses to be used in rimless eyeglasses.

The region of interest 4 may also be an area of the ophthalmic lens 2 wherein the thickness of the ophthalmic lens 2 is greater than a selected thickness. The selected thickness is for example comprised between 0,6 mm and 1 mm and is for example equal to 0,8 mm. In practice, this region of interest 4 is used when the outline of the rim or intended shape of the ophthalmic lens 2 after trimming are yet unknown, i.e. cannot be determined at the time of the coating. Remarkably, the shape of the "final" ophthalmic lens is statistically always included inside an area wherein the thickness is greater than 0,8 mm. Thus, ensuring that potential defects due to the dipping process are outside of such a region of interest 4 ensures said potential defects are positioned outside the shape of the "finished" ophthalmic lens.

In any case, once determined according to the disclosure, the region of interest 4 can be located or identified on the ophthalmic lens 2 thanks to the manufacturing marks.

The region of interest 4 may be determined based on: the design of the ophthalmic lens 2, the frame chosen by the wearer and, in some embodiment, geometrico-morphological features of the wearer. Geometrico-morphological parameters describe in particular how the finished ophthalmic lens will be positioned within the frame or rims of the frame with respect to the eye of the wearer. For a given outline of the region of interest 4, they therefore allow positioning this given outline with respect to the semi-finished ophthalmic lens 2. Geometrico-morphological parameters for example comprise a fitting height and an interpupillary distance, both parameters enabling for example to determine the position where the optical center of the ophthalmic lens 2 will be positioned relatively to the frame once the ophthalmic lens 2 is mounted in the frame.

Determining the region of interest 4 comprises accessing supplementary numerical data representative of the region of interest 4. Supplementary numerical data can for example be retrieved from a distant server or from a removable memory storage such as a USB drive. Supplementary numerical data are for example a point cloud or an equation representative of the outline of the rim. The processing unit retrieves the supplementary numerical data and store them on its one or more memories.

In this second embodiment, in the main step E3, the processing unit determines the dipping orientation taking into account the region of interest 4. More specifically, the processing unit takes into account primary distances D1, D2, D3 between the region of interest 4 and the contact locations where the clip 1 holds the peripheral edge 3 when the ophthalmic lens 2 is oriented according to the dipping orientation. In this second embodiment, an interaction parameter taken into account in step E3 is therefore a primary distance.

As shown in figure 3, when the ophthalmic lens 2 is held by the clips 1 in the dipping orientation, each primary distance D1, D2, D3 therefore corresponds to the distance between one of the clips 1, called associated clip 1, and the region of interest 4. In the example illustrated in figure 3, three primary distances D1, D2, D3 are defined, one for each clip 1

Each primary distance D1, D2, D3 is defined either as the distance between its associated clip 1 and the region of interest 4 along the horizontal axis X for the two lateral clips 1 or as the distance between its associated clip 1 and the region of interest 4 along the vertical axis Y for the lower clip 1.

Each primary distance D1, D2, D3 may also be defined as the distance between its associated clip 1 and the region of interest 4 along the direction of the force applied by the clip 1 on the peripheral edge 3, which also corresponds to the direction a crack is the most susceptible to propagate. In the example represented in figure 3, the directions of the forces applied by the clips 1 are also the horizontal axis X and the vertical axis Y.

Alternatively, each primary distance D1, D2, D3 may also be defined as the smallest distance between its associated clip 1 and the region of interest 4.

In this second embodiment, the processing unit determines the dipping orientation in order to reach at least one of the flowing criteria:

i) each primary distance D1, D2, D3 is above a predetermined length;
ii) one primary distance D1, D2, D3 corresponds to the maximum distance between the peripheral edge 3 and the region of interest 4;
iii) the sum of the primary distances D1, D2, D3 is maximum;
iv) each primary distance is above a predetermined percentage of the maximum distance between the peripheral edge 3 and the region of interest 4;
v) the smallest primary distance D1, D2, D3 is maximum.

In the second embodiment, during the main step E3, the processing unit tests one or several orientations of the ophthalmic lens 2 with respect to the clips 1, that is to say one or several angles ALPHA, in order to meet at least one of the criterion. The dipping orientation corresponds to one of the tested orientations for which at least one of the above-listed criteria is met.

Which criterion or criteria to reach might be chosen by the eyecare professional. The criteria might also be weighted relatively to each other. This means that the criteria might be ranked by priority.

The predetermined length is chosen in order to prevent defects from propagating to the region of interest 4 and penetration into it. For example, the predetermined length may be chosen to be above the typical length of a crack towards the central axis O. Thus, the predetermined length is for example comprised between 1 mm and 8 mm, for example between 3 mm and 5 mm. The predetermined length may also be chosen to be above the typical length of a meniscus of solidified liquid for the material of the coating involved.

The predetermined percentage is for example greater than 50% of the maximum distance between the peripheral edge 3 and the region of interest 4.

The predetermined length or the predetermined percentage of the maximum distance between the peripheral edge 3 and the region of interest 4 may for example be chosen based on the type of clamp, on the pressure applied by the clips 1 on the ophthalmic lens or on the type of glass the ophthalmic lens 2 is made of. They may be determined through dedicated series of tests. As noted above, a methodology similar to the one used for determining the predetermined thickness may be used for determining the predetermined length.

In a general way, the above-listed criteria of this second embodiment aim to position potential defects away from the region of interest 4. Other criteria based on the region of interest are conceivable. For example, with several clips, the dipping orientation might be determined such that the smallest primary distance D1, D2, D3 is maximized either locally or absolutely. Still in example, the dipping orientation might be determined such the sum of the primary distances D1, D2, D3 is maximized. The term "maximized" means here that the parameters are maximized while respecting the other criteria or maximized as much as enabled while maximizing as much as possible the other type of criteria. It might also mean identifying the orientation that enable to have the best combination, for example by trying to have each criterion "maximized" of at least a given percent.

Figures 2 and 3 allow illustrating the determination of the dipping orientation regarding the region of interest 4 and according to criterion i) of the second embodiment. Figure 2 shows the ophthalmic lens 2 in an arbitrary orientation (for example an orientation randomly chosen by the eye-care professional) before determining the dipping orientation. This arbitrary orientation corresponds to a tested orientation. As it can be seen in figure 2, the right lateral clip 1 is really close to the region of interest 4. The distance between the right lateral clip 1 and the region of interest 4 is below the predetermined length. The orientation of figure 2 is therefore not an acceptable dipping orientation.

Figure 3 shows the ophthalmic lens 2 in the dipping orientation. In this example, the three primary distances D1, D2, D3 are similar and each of them is above the predetermined length. The orientation of figure 3 is therefore an acceptable dipping orientation according to criterion i) of the second embodiment.

Meniscuses, unlike clip marks, are very difficult to prevent. Therefore, taking into account the region of interest 4 is advantageously complementary to taking into account the thickness of the peripheral edge 3 since the appearance of meniscuses is not corelated to the thickness of the peripheral edge 3.

Preferentially, in this second embodiment, the main step E3 consists in the processing unit determining the dipping orientation in order to meet both at least one of the criteria relative to the thickness of the peripheral edge 3 (as described in the first embodiment) and at least one of the criteria relative to the region of interest 4.

Which criterion or criteria to reached, or in which order to reach them, might be chosen by the eyecare professional. The criteria might also be weighted relatively to each other between the criteria relative to the thickness of the peripheral edge 3 and the criteria relative to the region of interest 4.

As a variant, the main step E3 of the second embodiment might be performed by taking into account only the region of interest and the primary distances, that is to say without taking into account the thickness of the peripheral edge. Taking into account only the region of interest might be sufficient, especially when the region of interest is the outline of the rim or the intended shape of the ophthalmic lens after trimming. Indeed, even though clip marks may appear due to an insufficient thickness of the peripheral edge at the contact location, those clip marks will have no negative impact on the further processing of the ophthalmic lens since there are away from the region of interest. As a variant, step E3 of the second embodiment might be performed by giving more weight to the criteria relative to the region of interest than to the criteria relative to the edge thickness.

In a third embodiment, the method further comprises a step of determining the positions of the clips 1 with respect to the bath.

The processing unit derives the positions of the clips 1 with respect to the bath from the information relative to dipping apparatus which come from the preliminary step of selection of the dipping apparatus. Determining those positions for example consist in analyzing, for instance numerically, an instruction manual or specifications relative to the dipping apparatus.

In this third embodiment, step E2 comprises determining the bottom of the of the ophthalmic lens 2 based on the positions of the clips 1 with respect to the bath of the dipping apparatus. The bottom of the ophthalmic lens 2 corresponds to the area where the drop might form, when the ophthalmic lens 2 is oriented according to the dipping orientation. The bottom of the ophthalmic lens 2 is therefore the part of the ophthalmic lens 2 which last exits the bath when the ophthalmic lens 2 is oriented according to said dipping orientation.

In this third embodiment, this objective is to orient the ophthalmic lens 2 such that drop is positioned outside the region of interest 4 and preferentially the further away from the region of interest 4.

In this third embodiment, in the main step E3, the processing unit determines the dipping orientation taking into account a secondary distance between the region of interest 4 and the bottom of the ophthalmic lens 2. In this third embodiment, an interaction parameter taken into account in step E3 is therefore the secondary distance.

The secondary distance (not represented) is defined as the distance between the region of interest 4 and the bottom of the ophthalmic lens 2 along the vertical axis Y. Thus, in the example illustrated in figure 3, the secondary distance is equal to the primary distance D3 between the lower clip 1 and the region of interest 4. As a variant, the secondary distance might be defined as the smallest distance between the region of interest 4 and the bottom of the ophthalmic lens 2.

In step 3, the processing unit may determine the dipping orientation such that a drop criterion, for example stating that the secondary distance has to be above a predetermined drop length, is meet.

In a variant of the third embodiment, the clips 1 may not be taken into account for determining the dipping orientation. For example, the dipping apparatus feature may be the liquid bath and the lens parameter may comprise the bottom of the ophthalmic lens 2 and the region of interest 4. In such a case, the dipping orientation is for example determined such as to maximize the secondary distance.

Preferentially, the processing unit may determine the dipping orientation such that the drop criterion is meet in addition to meeting at least one of the criteria relative to the thickness of the peripheral edge 3 (as described in the first embodiment) and/or at least one of the criteria relative to the region of interest 4 (as described in the second embodiment).

The secondary distance may also be taken into account as if it were another primary distance, when the processing unit tests orientations to reach a criterion relative to the region of interest 4 (as described in the second embodiment). In other words, the processing unit may determine the dipping orientation according to the second embodiment but considering that the dipping apparatus had one more clip, here a virtual fourth clip, located at the bottom of the ophthalmic lens 2.

In a preferred embodiment, determining the dipping orientation consists in minimizing a cost function comprising metrics relative to the following variables:

- the thickness of the peripheral edge 3 of the ophthalmic lens 2 where the clips 1 holds the peripheral edge 3 when the ophthalmic lens 2 is oriented according to the dipping orientation;
- the primary distances D1, D2, D3;
- the secondary distance.

The cost function FM, depending on the angle ALPHA which represents the orientation of the ophthalmic lens 2, might be written as follow:

$$FM(ALPHA) = \sum_i k_i * M_i(ALPHA)$$

$k_i$ are weighting coefficients and $M_i$ are the metrics of the cost function, $i$ being a real positive integer which is here comprised between 1 and 3.

Here, $M_1$ corresponds to a metric relative to the thickness of the peripheral edge 3, $M_2$ corresponds to a metric relative to the primary distances D1, D2, D3 and $M_3$ corresponds to a metric relative to the secondary distance. The weighting coefficients are for example $k_1$ = 1.5 for the metric $M_1$, $k_2$ = 2 for the metric $M_2$ and $k_3$ = 2 for the metric $M_3$. The weighting coefficients may be adapted in order to prevent more a type of defect than the others.

As a variant, more metrics may be used, for instance one for the thickness of the peripheral edge 3 at each contact location and one for each primary distance.

Figures 2 and 3 illustrate the determination of the dipping orientation by minimizing the cost function. Figure 2 shows the ophthalmic lens 2 in an arbitrary orientation before starting the minimization of the cost function, i.e. before determining the dipping orientation. As it can be seen in figure 2, the right lateral clip 1 is really close to the region of interest 4. In this situation, the value of the metric $M_2$ associated to the primary distances D1, D2, D3 is high and, therefore, so is the cost function.

Figure 3 shows the ophthalmic lens 2 in the dipping orientation. In this example, the three primary distances D1, D2, D3 are similar and the value of the metric $M_2$ associated to the primary distances is low and, therefore, so is the cost function. The orientation of figure 3 is therefore an acceptable dipping orientation relatively to minimizing the cost function.

The dipping orientation may also be determined by taking into account one of the followings:

- a material in which the ophthalmic lens 2 is made of;
- a prescription according to which the ophthalmic lens 2 has been manufactured;
- a linear edge between two regions of the ophthalmic lens 2;
- the thickness of the ophthalmic lens 2.

As a variant, in a similar way to the second embodiment, the main step E3 might be performed by taking into account only the region of interest, the primary distances and the secondary distance, that is to say without taking into account the thickness of the peripheral edge. This may for example be the case for ophthalmic lenses for which all the peripheral edge 3 is thicker than the predetermined thickness.

In all embodiments, once the dipping orientation is determined, the dipping orientation can then be used to place to ophthalmic lens 2 in the clips 1 of the dipping apparatus.

As shown in figure 1, the method continues either with a step E4 wherein the dipping orientation can be communicated to the dipping apparatus such that the dipping apparatus rotates the ophthalmic lens 2 into the dipping orientation or with a step E5 wherein the dipping orientation is marked on the surface on the ophthalmic lens 2 such that an eye-care professional may manually place the ophthalmic lens 2 in the dipping orientation with respect to the dipping apparatus.

Step E4 comprises sending instructions, which are representative of the dipping orientation, to the dipping apparatus. More specifically, in step E4, the processing unit determines, based on the dipping orientation, the position of the manufacturing marks with respect to the clips 1. Then, the processing unit transmits the position of the manufacturing marks with respect to the clips 1, or with respect to a top direction or a bottom direction of the dipping apparatus, to the dipping apparatus in the instructions.

To that end, the system comprises first communication means to emit the instructions and the dipping apparatus comprises second communication means to receive the instructions. The dipping apparatus also comprises processing means to implement the instructions and one or more actuators to move the ophthalmic lens 2. The dipping apparatus also comprises means for reading the manufacturing marks. In that case, the expression "dipping apparatus" corresponds to the dipping apparatus or to a loading apparatus for loading lenses on the dipping apparatus.

Before receiving the instructions, the ophthalmic lens 2 is already held by the clips 1 in an arbitrary orientation. Upon receiving the instructions, the processing means of the dipping apparatus read and implement them. The processing means then command the actuators to move, here to rotate, the ophthalmic lens 2 into the dipping orientation. More specifically, the dipping apparatus rotates the ophthalmic lens 2 such that the position of the manufacturing marks with respect to the clips 1 corresponds to the one sent in the instructions.

The manufacturing marks may also consist in a map of cosmetic defects already present on the lens. This map of cosmetic defects may be read by a cosmetic detection machine, which may be included in the system, in order create a map of the ophthalmic lens 2. Methods to create a map of an ophthalmic lens showing cosmetic defects are well known. Thanks to the instructions, the dipping apparatus may then determine the dipping orientation based on this map of the ophthalmic lens 2.

With step E4, the method can therefore be fully automated from determining the dipping orientation to placing the ophthalmic lens 2 in the dipping orientation.

On the other hand, step E5 allows preparing the ophthalmic lens 2 to be manually handled.

Step E5 comprises performing a dipping mark, representative of the dipping orientation, on the ophthalmic lens 2. The dipping mark indicates the person manually handling the ophthalmic lens 2 how to place to ophthalmic lens 2 with respect to the dipping apparatus (for example with respect to one of the clips 1 or to the bath) so that the ophthalmic lens 2 is in the dipping orientation during the dip treatment.

The dipping mark for example indicates the top of the ophthalmic lens 2, that is to say the part of the ophthalmic lens 2 to place at the highest point with respect to the bath so that the ophthalmic lens is in the dipping orientation. In other words, such a top dipping mark indicates the part of the omphalic lens 2 which is the last immersed during the dip treatment.

Preferentially, the dipping mark indicates the bottom of the ophthalmic lens 2. In this way, advantageously, the eyecare professional can easily align the dipping mark with the lower clip 1.

The dipping mark comprises one of the followings:

- a non-permanent mark;
- a laser engraving;

The step E5 may be performed also prior to step E4. In this case, the dipping mark (instead of the manufacturing mark) can be used by the dipping apparatus to automatically position the ophthalmic lens 2 into the dipping orientation. In other words, the dipping mark may also be used when the method is fully automated.

Indeed, the dipping mark may be more visible or more detectable than the manufacturing marks, the manufacturing marks may not allow to determine accurately an orientation (for instance because they present a rotational symmetry) or the ophthalmic lens 2 may not have any manufacturing marks.

Although selecting the dipping apparatus has been presented as a preliminary step of the method according to in the invention, in a variant, the method may also allow selecting the dipping apparatus.

In this variant, the method, for instance according to the third embodiment, can be iterated several times. At each iteration, a distinct dipping apparatus is selected in the preliminary step. The distinct dipping apparatus for example have distinct numbers of clips and/or distinct clip positions. The method can then comprise a further step of comparing the minimized cost function obtained for each dipping apparatus. Then method can then comprise a step of recommending a dipping apparatus. Typically, the dipping apparatus associated to the lowest cost function is recommended for the dip treatment. In the first or second embodiment, the dipping apparatus recommended may be the one allowing to reach the greatest number of criteria.

The method according to the invention can also be implemented between two successive dip treatments.

Indeed, after a first dip treatment, the thickness of the peripheral edge and/or the region of interest may change and the ophthalmic lens 2 may need to be re-oriented according to a new dipping orientation.

**Claims**

1. A computer-implemented method for determining a dipping orientation of an ophthalmic lens (2) with respect to a dipping apparatus feature, the method comprising the step of:

   - determining a lens parameter relative to a shape of the ophthalmic lens (2);
   - determining said dipping orientation taking into account an interaction parameter representative of a relationship between said lens parameter and said dipping apparatus feature.

2. Method according to claim 1, wherein said dipping apparatus feature is a clip (1) holding the ophthalmic lens (2) by its peripheral edge (3) during a dip treatment and wherein said interaction parameter comprises at least one of the following:

   - a thickness of the peripheral edge (3) of the ophthalmic lens (2) where the clip (1) holds the peripheral edge (3) when the ophthalmic lens (2) is oriented according to said dipping orientation;
   - a primary distance (D1, D2, D3) between a region of interest (4) and a contact location where the clip (1) holds the peripheral edge (3) when the ophthalmic lens (2) is oriented according to said dipping orientation;
   - a secondary distance between the region of interest (4) and a bottom of the ophthalmic lens (2) with respect to a bath, in which the ophthalmic lens (2) is immersed during the dip treatment, when the ophthalmic lens (2) is oriented according to said dipping orientation.

3. Method according to claim 2, wherein the method further comprises the steps of:

   - acquiring geometrical data representative of the shape of the ophthalmic lens (2); and
   - determining, based on said geometrical data, at least one of the thickness of the peripheral edge (3) of the ophthalmic lens (2) and the region of interest (4).

4. Method according to claim 3, wherein acquiring geometrical data consist in accessing numerical data.

5. Method according to anyone of claims 2 to 4, wherein said dipping orientation is determined such as to reach at least one of the following criteria:

   - the clip (1) holds the peripheral edge (3) where the thickness of the peripheral edge (3) is above a predetermined thickness;
   - the clip (1) holds the peripheral edge where the thickness of the peripheral edge is below an upper thickness,
   - the clip (1) holds the peripheral edge (3) where the thickness of the peripheral edge (3) is maximum;
   - the clip (1) holds the peripheral edge (3) where the thickness of the peripheral edge (3) is above a predetermined percentage of a maximum thickness of the peripheral edge (3);
   - said primary distance (D1, D2, D3) is above a predetermined length;
   - said primary distance (D1, D2, D3) is maximum;
   - said primary distance (D1, D2, D3) is above a predetermined percentage of a maximum length between the region of interest (4) and the peripheral edge (3);
   - said secondary distance is above another predetermined length;
   - said secondary distance is maximum;
   - said secondary distance is above another predetermined percentage of the maximum length.

6. Method according to anyone of claims 2 to 5, wherein said dipping apparatus comprises at least two clips (1) and wherein said dipping orientation is determined such as to reach at least one of the following criteria:

   - the smallest one of the thicknesses of the peripheral edge (3) of the ophthalmic lens (2) where one of the clips (1) holds the peripheral edge (3) when the ophthalmic lens (2) is oriented according to said dipping orientation is maximum;
   - the smallest one of the primary distances (D1, D2, D3) between the region of interest (4) and a contact location where one of the clips (1) holds the peripheral edge (3) when the ophthalmic lens (2) is oriented according to said dipping orientation is maximum.

7. Method according to anyone of claims 2 to 4, wherein said dipping orientation is determined by minimizing a cost function comprising the following interaction parameters:

   - the thickness of the peripheral edge (3) of the ophthalmic lens (2) where the clip (1) holds the peripheral edge (3) when the ophthalmic lens (2) is oriented according to said dipping orientation;

- said primary distance (D1, D2, D3);
- said secondary distance.

8. Method according to anyone of claims 2 to 7, wherein said region of interest (4) comprises one of the followings:

- a shape of a rim in which the ophthalmic lens (2) is to be mounted in;
- an intended shape of the ophthalmic lens (2) after trimming;
- an area of the ophthalmic lens (2) wherein the thickness is greater than a selected thickness.

9. Method according to anyone of claims 1 to 8, wherein the ophthalmic lens (2) comprises a manufacturing mark, the method further comprising a step of determining, based on said dipping orientation, a position of the manufacturing mark with respect to the dipping apparatus feature.

10. Method according to anyone of claims 1 to 9, further comprising a step of applying a dipping mark on the ophthalmic lens (2) representative of said dipping orientation.

11. Method according to claim 10, wherein the dipping mark comprises one of the followings:

- a non-permanent mark;
- a laser engraving.

12. Method according to anyone of claims 1 to 11, further comprising a step of sending instructions to a dipping apparatus for moving the ophthalmic lens (2) into said dipping orientation.

13. Method according to anyone of claims 1 to 12, wherein said dipping orientation is also determined taking into account one of the followings:

- a material in which the ophthalmic lens (2) is made of;
- a prescription according to which the ophthalmic lens (2) has been manufactured;
- a linear edge (3) between two regions of the ophthalmic lens (2);
- a thickness of the ophthalmic lens (2).

14. Method according to anyone of claims 1 to 13, wherein the dipping treatment is used to provide at least one of the following:

- a tinted layer;
- a layer of a hard-coat;
- a layer of a primer coating;
- an anti-shock layer;
- an anti-reflection layer.

15. System for determining a dipping orientation of an ophthalmic lens (2) with respect to a dipping apparatus feature, the system comprising a processing unit adapted to determine a lens parameter relative to a shape of the ophthalmic lens (2) and to determine said dipping orientation taking into account an interaction parameter representative of a relationship between said lens parameter and said dipping apparatus feature.

## Fig.1

## Fig.2

## Fig.3

Europäisches
Patentamt

European
Patent Office

Office européen
des brevets

# EUROPEAN SEARCH REPORT

Application Number

EP 21 30 6812

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/384788 A1 (KOENIG II JERRY L [US]) 10 December 2020 (2020-12-10) | 1,9-15 | INV. B29D11/00 |
| A | * abstract * * figures 1-6 * * paragraphs [0002], [0037], [0038], [0047], [0048], [0069], [0082] * | 2-8 | |
| X | US 2021/032809 A1 (SHIBATA RYOJI [JP] ET AL) 4 February 2021 (2021-02-04) * abstract * * paragraphs [0033], [0044], [0132] – [0135], [0142] * * figure 1 * | 1,9-15 | |
| X | US 2013/280422 A1 (BRISSON JULIEN [FR] ET AL) 24 October 2013 (2013-10-24) | 1-5,8, 12-15 | |
| A | * abstract * * paragraphs [0055] – [0061], [0067] – [0075] * * figures 1-3 * | 6,7,9-11 | TECHNICAL FIELDS SEARCHED (IPC) |
| A | US 2010/275839 A1 (VELASQUEZ PHILLIP [US] ET AL) 4 November 2010 (2010-11-04) * abstract * * figures 1-8 * | 1-15 | B29D |

The present search report has been drawn up for all claims

| Place of search | Date of completion of the search | Examiner |
|---|---|---|
| The Hague | 3 June 2022 | Heckmann, Paul |

EPO FORM 1503 03.82 (P04C01)

## ANNEX TO THE EUROPEAN SEARCH REPORT
## ON EUROPEAN PATENT APPLICATION NO.

EP 21 30 6812

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | | Publication date | Patent family member(s) | | Publication date |
|---|---|---|---|---|---|
| US 2020384788 | A1 | 10-12-2020 | AU 2017430696 | A1 | 19-03-2020 |
| | | | BR 112020004508 | A2 | 15-09-2020 |
| | | | CA 3074764 | A1 | 14-03-2019 |
| | | | CN 111201127 | A | 26-05-2020 |
| | | | EP 3678856 | A1 | 15-07-2020 |
| | | | JP 2021502230 | A | 28-01-2021 |
| | | | KR 20200075819 | A | 26-06-2020 |
| | | | PH 12020500441 | A1 | 25-01-2021 |
| | | | US 2020384788 | A1 | 10-12-2020 |
| | | | WO 2019048041 | A1 | 14-03-2019 |
| US 2021032809 | A1 | 04-02-2021 | CN 112295872 | A | 02-02-2021 |
| | | | EP 3771552 | A2 | 03-02-2021 |
| | | | KR 20210014581 | A | 09-02-2021 |
| | | | US 2021032809 | A1 | 04-02-2021 |
| US 2013280422 | A1 | 24-10-2013 | EP 2651627 | A1 | 23-10-2013 |
| | | | HU E025540 | T2 | 29-02-2016 |
| | | | US 2013280422 | A1 | 24-10-2013 |
| | | | WO 2012080775 | A1 | 21-06-2012 |
| US 2010275839 | A1 | 04-11-2010 | US 2010275839 | A1 | 04-11-2010 |
| | | | WO 2010118073 | A1 | 14-10-2010 |

EPO FORM P0459

For more details about this annex : see Official Journal of the European Patent Office, No. 12/82